(19) Europäisches Patentamt
European Patent Office
Office européen des brevets

(11) **EP 1 547 026 B1**

(12) **EUROPÄISCHE PATENTSCHRIFT**

(45) Veröffentlichungstag und Bekanntmachung des Hinweises auf die Patenterteilung:
**27.06.2007   Patentblatt 2007/26**

(21) Anmeldenummer: 03757908.3

(22) Anmeldetag: **02.10.2003**

(51) Int Cl.:
***G07D 7/12*** *(2006.01)*

(86) Internationale Anmeldenummer:
**PCT/EP2003/010964**

(87) Internationale Veröffentlichungsnummer:
**WO 2004/034338 (22.04.2004 Gazette 2004/17)**

(54) **VORRICHTUNG UND VERFAHREN ZUR PRÜFUNG DER AUTHENTIZITÄT EINER FÄLSCHUNGSSICHEREN MARKIERUNG**

DEVICE AND METHOD FOR CHECKING THE AUTHENTICITY OF AN ANTI-FORGERY MARKING

DISPOSITIF ET PROCEDE PERMETTANT DE VERIFIER L'AUTHENTICITE D'UNE MARQUE INFALSIFIABLE

(84) Benannte Vertragsstaaten:
**AT BE BG CH CY CZ DE DK EE ES FI FR GB GR HU IE IT LI LU MC NL PT RO SE SI SK TR**

(30) Priorität: **05.10.2002   DE 10246563**

(43) Veröffentlichungstag der Anmeldung:
**29.06.2005   Patentblatt 2005/26**

(73) Patentinhaber: **November Aktiengesellschaft**
**91056 Erlangen (DE)**

(72) Erfinder:
• **GRASSL, Björn**
  **90411 Nürnberg (DE)**
• **MAKSIMOVIC, Radoslav**
  **91056 Erlangen (DE)**

• **BAUER, Georg**
  **90409 Nürnberg (DE)**
• **DOMNICK, Ralph**
  **91054 Buckenhof (DE)**
• **WALTER, Harald**
  **91052 Erlangen (DE)**

(74) Vertreter: **Gassner, Wolfgang**
  **Patentanwälte**
  **Dr. Gassner & Partner**
  **Marie-Curie-Strasse 1**
  **91052 Erlangen (DE)**

(56) Entgegenhaltungen:
| | |
|---|---|
| EP-A- 0 341 002 | WO-A-01/53113 |
| WO-A-02/18155 | WO-A-02/31780 |
| WO-A-96/39307 | WO-A-97/01156 |
| US-A- 5 517 338 | US-A- 5 596 402 |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung und ein Verfahren zur Prüfung der Authentizität einer fälschungssicheren Markierung mit in Abhängigkeit des Beobachtungswinkels sich ändernden Farben.

Derartige Markierungen werden zur Kennzeichnung von Banknoten und anderer geldwerter Produkte, z. B. Wertpapiere, Schecks, Eintrittskarten und dgl., sowie im Produkt- und Markenschutz eingesetzt. Auch in der Sicherheitstechnik finden derartige Markierungen zunehmend Einsatz. Sie dienen dort beispielsweise zur Kennzeichnung von Zugangsausweisen.

Nach dem Stand der Technik ist es allgemein bekannt, Farben auf Oberflächen mit Hilfe von Spektrometern zu bestimmen. Aus der US 5,369,481 sowie der US 4,968,143 sind Vorrichtungen zur Messung von Farben bekannt, die das Messprinzip der so genannten Ulbricht ischen Kugel verwenden. Dabei wird die Oberfläche unter verschiedenen Winkeln mit weißem Licht beleuchtet. Das diffus gestreute Licht wird unter einem festen Winkel erfasst und spektral analysiert. Die bekannten Vorrichtungen sind teuer. Sie eignen sich nicht zur Messung von in Abhängigkeit des Beobachtungswinkels sich ändernden Farben.

Aus der US 5,042,893 ist eine Vorrichtung zur Spektralanalyse bekannt. Dabei wird das von einer Probe reflektierte Licht in eine Lichtleitfaser eingekoppelt und in ein Spektrometer geleitet. Dort wird es spektral aufgespaltet und die Intensität des spektral aufgespalteten Lichts mittels einer Fotodiodenzeile gemessen. Die Vorrichtung ist insbesondere wegen der erforderlichen Lichtleitfaseroptik teuer. Sie eignet sich nicht ohne weiteres zur Messung von in Abhängigkeit des Beobachtungswinkels sich ändernden Farben.

Die US 6,285,452 beschreibt eine Vorrichtung zur Messung von Farben, bei der die Oberfläche einer Probe ohne Verwendung einer Lichtleitfaseroptik bestrahlt wird. Das von der Probe zurückgeworfene Licht wird spektral analysiert. Auch diese Vorrichtung benötigt teuere spektral zerlegende Komponenten. Sie eignet sich ebenfalls nicht zur Messung von in Abhängigkeit des Beobachtungswinkels sich ändernden Farben.

Aus der WO 02/18155 A2 ist eine fälschungssichere Markierung bekannt. Die Markierung weist in Abhängigkeit des Beobachtungswinkels sich ändernde Farben auf. Diese so genannten Kippwinkelfarben werden erzeugt durch eine in einem vorgegebenen Abstand von einer Metallschicht angeordnete Clusterschicht. Solchermaßen erzeugte Kippwinkelfarben weisen ein besonders ausgeprägtes und charakteristisches Spektrum auf.

Daneben sind beispielsweise aus der DE 44 34 168 A1 oder der DE 199 62 779 A1 Vorrichtungen zur Bestimmung der Qualität von farbigen Oberflächen bekannt. Mit solchen Vorrichtungen wird die Farbe und der Glanz der Oberfläche bestimmt. Derartige Vorrichtungen eignen sich aber nicht zur Bestimmung von Kippwinkelfarben.

WO0231780 offenbart ein Verfahren und eine Vorrichtung zur Untersuchung von optischen variablen Materialien (OVM) auf einem Substrat, wobei drei Leuchtdioden (rot, grün, blau) in einem Gehäuse angeordnet sind. Das vom Substrat reflektierte Licht wird bei mehreren verschiedenen Winkeln über ein Beobachtungsfenster von Photodioden gemessen. Gemäß D1 wird die Oberfläche unter einem einzigen (bestimmt durch das zu untersuchende Material) festgelegten Winkel (vorzugsweise 45°) von einem kombinierten Strahl der LEDs bestrahlt - dieses Verfahren erzielt eine ausreichende Messgenauigkeit mit einem einzigen Bestrahlungswinkel.

Aufgabe der Erfindung ist es, die Nachteile nach dem Stand der Technik zu beseitigen. Es sollen insbesondere eine Vorrichtung und ein Verfahren angegeben werden, mit denen auf einfache und kostengünstige Weise die Authentizität einer fälschungssicheren Markierung geprüft werden kann.

Diese Aufgabe wird durch die Merkmale der Ansprüche 1 und 14 gelöst. Zweckmäßige Ausgestaltungen ergeben sich aus den Merkmalen der Ansprüche 2 bis 13 und 15 bis 34.

Nach Maßgabe der Erfindung ist eine Vorrichtung zur Prüfung der Authentizität einer fälschungssicheren Markierung mit in Abhängigkeit des Beobachtungswinkels sich ändernden Farben, vorgesehen gemäß dem Anspruch 1.

Die vorgeschlagene Vorrichtung ist einfach aufgebaut. Es entfällt insbesondere das Vorsehen kostenaufwändiger spektral zerlegender Komponenten. Mit der vorgeschlagenen Vorrichtung wird das von der Oberfläche reflektierte Licht nicht spektral zerlegt. Es wird stattdessen Licht in mehreren unterschiedlichen Wellenlängen auf die Oberfläche eingestrahlt und deren reflektierte Intensitäten gemessen. Diese werden mit zuvor für mindestens eine vorgegebene Farbe gemessenen Referenz-Intensitäten verglichen. Eine solche Vorrichtung lässt sich mit relativ billig verfügbaren Bauelementen realisieren.

Nach der Erfindung sind mehrere, in einem vorgegeben Spektralbereich emittierende, zweite Lichtquellen vorgesehen, wobei sich die zweiten Lichtquellen in der Wellenlänge ihres Emissionsmaximums voneinander unterscheiden, und wobei die zweiten Lichtquellen im Gehäuse so aufgenommen sind, dass sie die Oberfläche bei darauf aufgesetztem Gehäuse unter einem vorgegeben dritten Winkel bestrahlen. Das Vorsehen von zweiten Lichtquellen, welche unter einem vorgegeben dritten Winkel die Oberfläche bestrahlen, ermöglicht die Bestimmung von Farben in Abhängigkeit des Beobachtungswinkels. Es können damit besonders einfach Kippfarbeffekte identifiziert werden, wie sie insbesondere zur fälschungssicheren Markierung von Geldscheinen oder dgl. benutzt werden.

Zweckmäßigerweise ist ein in einem vierten Winkel angeordnetes zweites Mittel zur Messung der Intensitäten des von der Oberfläche reflektierten Lichts vorgesehen. Das Vorsehen eines solchen zweiten Mittels zur Messung der Intensitäten gewährleistet eine besonders zuverlässige Erkennung und Bestimmung der Farben. Beispielsweise ist es möglich, zur Bestimmung von Farben die Oberfläche mittels der ersten Lichtquellen zu bestrahlen und das reflektierte Licht sowohl mit dem ersten als auch mit dem zweiten Mittel zur Messung der Intensitäten des von der Oberfläche reflektierten Lichts unter verschiedenen Winkeln zu erfassen. Damit ist eine besonders zuverlässige Farbbestimmung möglich. Gleichzeitig ermöglicht das Vorsehen zweier Mittel zur Messung der Intensitäten des reflektierten Lichts auch die Bestimmung von in Abhängigkeit des Beobachtungswinkels sich ändernden Farben.

Es hat sich als vorteilhaft erwiesen, dass der vorgegebene Spektralbereich bei halber Maximalintensität eine Breite von weniger als 100 nm, vorzugsweise von weniger als 50 nm, aufweist. Die Breite bei halber Maximalintensität wird auch als Halbwertsbreite oder fullwidth-at-half-maximum (FWHM) bezeichnet. Als Lichtquellen kommen zweckmäßigerweise Leuchtdioden, Laser oder die freien Enden von damit verbundenen Lichtleitfasern zur Anwendung. Es können auch Leuchtdioden verwendet werden, welche Licht mit verschiedenen Wellenlängen aussenden können. Das Mittel zur Messung der Intensitäten weist vorteilhafterweise mindestens eine Fotodiode auf.

Nach einer weiteren Ausgestaltung ist der erste Winkel gleich dem zweiten Winkel, so dass das auf der Oberfläche eingestrahlte Licht spekulär reflektiert unter dem zweiten Winkel gemessen wird. Dabei sind also die ersten Lichtquellen und das erste Mittel zur Messung der Intensitäten bezüglich der Normalen auf den Messpunkt unter demselben Winkel angeordnet. Bei der vorgeschlagenen Anordnung sind die reflektierten Intensitäten maximal. Damit wird die Zuverlässigkeit sowie die Geschwindigkeit der Messung erhöht.

Nach einem weiteren Ausgestaltungsmerkmal ist der dritte Winkel gleich dem vierten Winkel, so dass das auf der Oberfläche unter dem dritten Winkel eingestrahlte Licht spekulär reflektiert unter dem vierten Winkel gemessen wird. Das ermöglicht eine besonders zuverlässige Bestimmung von in Abhängigkeit des Beobachtungswinkels sich ändernden Farben.

Nach einer weiteren Ausgestaltung sind der erste und der dritte Winkel voneinander verschieden und liegen in einem Bereich von 5° bis 60°, vorzugsweise von 15° bis 45°. Unter den vorgenannten Winkeln werden Intensitäten reflektiert, die sich gut zur Messung eignen.

Nach einer weiteren vorteilhaften Ausgestaltung ist eine Einrichtung zum sequenziellen Beleuchten der Oberfläche mit den Lichtquellen und zum Messen der jeweiligen Intensitäten des reflektierten Lichts in definierter Reihenfolge vorgesehen.

Vorteilhaft ist es ferner, dass das Emissionsmaximum der Lichtquellen im nahen UV-, im sichtbaren oder im IR-Spektralbereich liegt. Besonders geeignet sind Lichtquellen im Wellenlängenbereich von 350 nm bis 1000 nm.

Nach einer weiteren Ausgestaltung wird die Beleuchtungs- und die Messdauer in Abhängigkeit der Leuchtcharakteristik jeder der Lichtquellen und/oder der Messcharakteristik des Mittels zur Messung der Intensitäten festgelegt. Es ist dazu eine geeignete Einrichtung zur Steuerung der Beleuchtungs- und der Messdauer vorgesehen. Die Leuchtstärke der Lichtquellen hängt stark von der emittierten Wellenlänge ab. Um vergleichbare Messsignale zu erhalten, ist es zweckmäßig, die Leuchtdauer der einzelnen Lichtquellen in Abhängigkeit deren emittierter Wellenlänge anzupassen. In gleicher Weise wird die Messdauer an die Messcharakteristik des Mittels zur Messung der Intensitäten angepasst.

Nach einer weiteren Ausgestaltung sind mechanische, elektronische oder Software-technische Einrichtungen zur Kompensation von Untergrundlicht vorgesehen. Untergrundlicht, beispielsweise Umgebungslicht, beeinflusst das Messsignal. Mittels mechanischer Einrichtungen wird Umgebungslicht möglichst weit gehend abgeschirmt. Es ist ferner möglich, Restlicht, welches bei ausgeschalteten Lichtquellen an den Mitteln zur Messung der Intensitäten ankommt, zu berücksichtigen. Eine so genannte Dunkelmessung kann entweder vor oder nach der eigentlichen Farbmessung erfolgen. Ferner lassen sich durch elektronische Filter oder Softwaregestützte Filter ungewollte Störsignale, z. B. Frequenzen von 50 Hz oder 100 Hz, von den eigentlichen Messsignalen trennen.

Nach einer weiteren Ausgestaltung sind mindestens 3 und höchstens 12 erste und/oder zweite Lichtquellen vorgesehen. Die Anzahl der eingesetzten Lichtquellen beeinflusst die Genauigkeit der Farbbestimmung. Aus Platz- und Anordnungsgründen hat es sich als besonders vorteilhaft erwiesen, zwischen 4 und 7 Lichtquellen pro Messwinkel zu verwenden.

Nach einer weiteren Ausgestaltung weist das Mittel zum automatischen Vergleich oder zur Berechnung der Koordinaten im Farbraum einen Microcontroller auf. Im Microcontroller können Referenz-Intensitäten oder Koordinaten im Farbraum gespeichert und mit gemessenen Werten verglichen werden. Zweckmäßigerweise ist eine Anzeigevorrichtung, vorzugsweise ein Display oder eine oder mehrere weitere Leuchtdioden, zur Anzeige des beim Vergleich ermittelten Ergebnisses vorgesehen. Die Anzeigevorrichtung kann auch in einem externen Gerät, wie z. B. PDA oder Laptop, integriert sein, welches mit der Vorrichtung über ein Kabel oder über kabellose Verbindungen Daten austauscht. Mit einer solchen Anzeigevorrichtung ist es z. B. möglich, einer identifizierten Kippfarbe zusätzlich einen Herkunftsparameter zuzuordnen und diesen mittels der Anzeigevorrichtung auszugeben. So können in für den Verkehr nicht erkennbarer Weise Markierungen mit verschlüsselten Informationen über Distributionswege, Herkunft oder für logistische Zwecke identifiziert werden.

Zur Trennung der Störsignale von den Messsignalen kann zweckmäßigerweise eine Einrichtung zur Modulation der Lichtquellen vorgesehen sein.

Als besonders vorteilhaft hat es sich erwiesen, dass die fälschungssichere Markierung eine mit einem Gegenstand verbundene, elektromagnetische Wellen reflektierende erste Schicht aufweist, auf welcher eine für elektromagnetische Wellen durchlässige, inerte zweite Schicht mit einer vorgegebenen Dicke aufgebracht ist, und wobei eine aus metallischen Clustern gebildete dritte Schicht auf der zweiten Schicht aufgebracht ist. Bei dem "Gegenstand" handelt es sich um den zu markierenden Gegenstand, z. B. eine Banknote, ein Etikett oder dgl.. Die vorgeschlagene Markierung ist besonders fälschungssicher. Die Farben weisen ein charakteristisches Spektrum auf. Besonders bemerkenswert ist es, dass bei einer solchen Markierung reproduzierbar stets dieselben Farben bei denselben Kippwinkeln beobachtbar sind. Das ermöglicht eine automatische Prüfung der Authentizität der Markierung.

Die erfindungsgemäße Vorrichtung eignet sich besonders zur Prüfung der Authentizität der vorgeschlagenen fälschungssicheren Markierung. Insoweit können die erfindungsgemäße Vorrichtung und die fälschungssichere Markierung zusammen ein aufeinander abgestimmtes System oder einen Kit zur Sicherstellung der Authentizität von Gegenständen bilden.

Nach einer weiteren Ausgestaltung kann zumindest eine der Schichten eine Struktur aufweisen. Bei der Struktur kann es sich um eine Struktur in der Fläche nach Art eines Musters oder einer Zeichnung handeln. Es kann sich dabei aber auch um eine reliefartige Struktur handeln. In diesem Fall erscheint die Markierung in unterschiedlichen Farben.

Nach einem weiteren Ausgestaltungsmerkmal ist eine die dritte Schicht überdeckende, für elektromagnetische Wellen durchlässige inerte vierte Schicht vorgesehen. Die vierte Schicht dient in erster Linie dem Schutz der überdeckten Schichten.

Die metallischen Cluster können z. B. aus Silber, Gold, Platin, Aluminium, Kupfer, Zinn, Eisen, Kobalt, Chrom, Nickel, Palladium, Titan oder Indium gebildet sein. Die zweite und/oder vierte Schicht können aus einem der folgenden Materialien hergestellt sein: Metalloxid, Metallnitrit, Metallcarbid, insbesondere aus Siliziumoxid, -nitrit, Zinnoxid, -nitrit, Aluminiumoxid, -nitrit oder Polymer, insbesondere Polycarbonat (PC), Polyethylen (PE), Polypropylen (PP), Polyurethan (PU), Polyimid (PI), Polystyrol (PS), Polyethylenterephthalat (PET) oder Polymethacrylat (PMA). Diese Materialien sind chemisch im Wesentlichen inert. Sie sind feuchtigkeitsunempfindlich. Die Funktion der zweiten Schicht besteht im Wesentlichen darin, einen vorgegebenen Abstand zur dritten Schicht und/oder eine vorgegebene Struktur dauerhaft bereitzustellen.

Nach einer weiteren Ausgestaltung ist vorgesehen, dass bei einem Abstand zwischen der ersten und der dritten Schicht von weniger als 2 μm eine eindeutig identifizierbare Färbung erkennbar ist. Die Färbung ist abhängig vom Beobachtungswinkel und charakteristisch.

Nach einem weiteren Ausgestaltungsmerkmal ist vorgesehen, dass die Schichten zumindest teilweise mittels Dünnschichttechnologie hergestellt wird/werden. Dabei kommen insbesondere Vakuumbeschichtungstechnologien, wie PVD oder CVD, sowie Drucktechniken, wie Tiefdruck, in Betracht.

Nach weiterer Maßgabe der Erfindung ist ein Verfahren zur Prüfung der Authentizität einer fälschungssicheren Markierung mit in Abhängigkeit des Beobachtungswinkels sich ändernden Farben, vorgesehen, gemäß dem Anspruch 14.

Das vorgeschlagene Verfahren ist einfach und ohne großen technischen Aufwand durchführbar. Insbesondere sind keine kostenaufwändigen spektral zerlegenden Komponenten erforderlich. Gleichwohl können mit dem vorgeschlagenen Verfahren zuverlässig die Authentizität fälschungssicherer Markierungen mit in Abhängigkeit des Beobachtungswinkels sich ändernden Farben bestimmt werden.

Die vorteilhaften Ausgestaltungen des Verfahrens entsprechen denen der Vorrichtung und sind sinngemäß in gleicher Weise auf das Verfahren übertragbar.

Nachfolgend werden Ausführungsbeispiele der Erfindung anhand der Zeichnung näher erläutert. Hierin zeigen:

Fig. 1    eine schematische Querschnittsansicht eines Messkopfs der Vorrichtung,

Fig. 2    Anordnungen von Lichtquellen,

Fig. 3    ein Blockschaltbild der Vorrichtung,

Fig. 4    Messergebnisse von Absorptionsmessungen unter verschiedenen Beleuchtungswinkeln,

Fig. 5    eine schematische Querschnittsansicht einer ersten ständig sichtbaren Markierung,

Fig. 6    eine schematische Querschnittsansicht einer zweiten ständig sichtbaren Markierung,

Fig. 7.    Absorptionsspektren einer Markierung gemäß Fig. 5 unter verschiedenen Beobachtungswinkeln und

Fig. 8    eine quantitative Auswertung der Spektren gemäß Fig. 7 bei verschiedenen Wellenlängen.

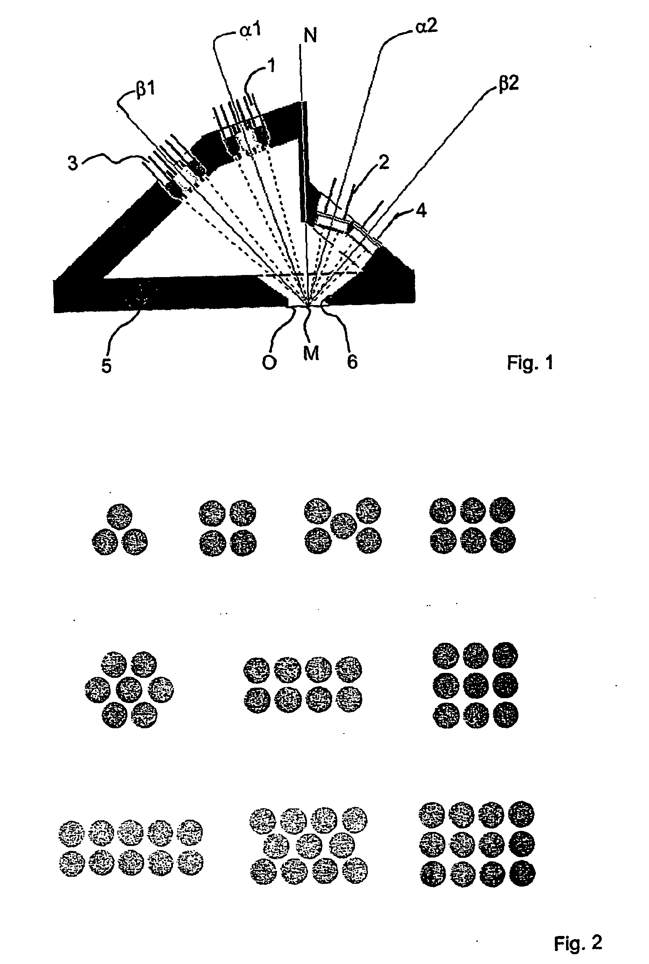

In Fig. 1 ist ein Messkopf einer Vorrichtung zur Bestimmung von auf einer Oberfläche aufgebrachten Farben gezeigt, die sich in Abhängigkeit des Beobachtungswinkels ändern. Mit 1 ist eine Gruppe von ersten Lichtquellen bezeichnet, mit denen unter einem ersten Winkel α1 ein auf einer Oberfläche O der Probe befindlicher Messpunkt M beleuchtet werden kann. Unter ei-

nem zweiten Winkel $\alpha2$ ist eine erste Fotodiode 2 angeordnet. Ferner ist im Messkopf unter einem dritten Winkel $\beta1$ eine Gruppe von zweiten Lichtquellen 3 aufgenommen. Unter einem vierten Winkel $\beta2$ ist eine zweite Fotodiode 4 vorgesehen. Der erste Winkel $\alpha1$ und der zweite Winkel $\alpha2$ sind bezüglich einer Normalen N auf den Messpunkt M gleich groß. Außerdem liegen die zu den beiden Winkeln gehörenden Geraden sowie die Normale N in einer Ebene. Ebenso sind der dritte Winkel $\beta1$ und der vierte Winkel $\beta2$ bezüglich der Normalen N gleich groß. Auch die Geraden zu diesen beiden Winkeln liegen in einer Ebene mit der Normalen N. Die Lichtquellen 1, 3 und die Fotodioden 2, 4 sind in einem gemeinsamen lichtundurchlässigen Gehäuse 5 befestigt, das im Boden eine Messöffnung 6 aufweist.

Sowohl bei den ersten Lichtquellen 1 als auch bei den zweiten Lichtquellen 3 kann es sich um Leuchtdioden handeln, deren Emissionsspektrum eine Halbwertsbreite von weniger als 50 nm aufweist. Die Emissionsmaxima der Leuchtdioden sind jeweils verschieden voneinander. Es ist gleichwohl zweckmäßig, dass die erste Gruppe von Lichtquellen 1 und die zweite Gruppe von Lichtquellen 2 jeweils dieselbe Anzahl an Leuchtdioden mit jeweils derselben Leuchtcharakteristik aufweisen.

In Fig. 2 sind verschiedene Anordnungen der ersten Lichtquellen 1 und der zweiten Lichtquellen 2 gezeigt. Die ersten Lichtquellen 1 können aus mindestens 3 und höchstens 12 unterschiedlichen Leuchtkörpern bestehen. Besonders bevorzugt bestehen die ersten Lichtquellen 1 und die zweiten Lichtquellen 2 aus 7 unterschiedlichen Leuchtkörpern. Bei den Leuchtkörpern kann es sich neben Leuchtdioden auch um Laser oder um die einen Enden von Lichtleitfasern handeln, deren andere Enden jeweils mit einer Lichtquelle, z. B. einer Leuchtdiode oder einem Laser, verbunden sind.

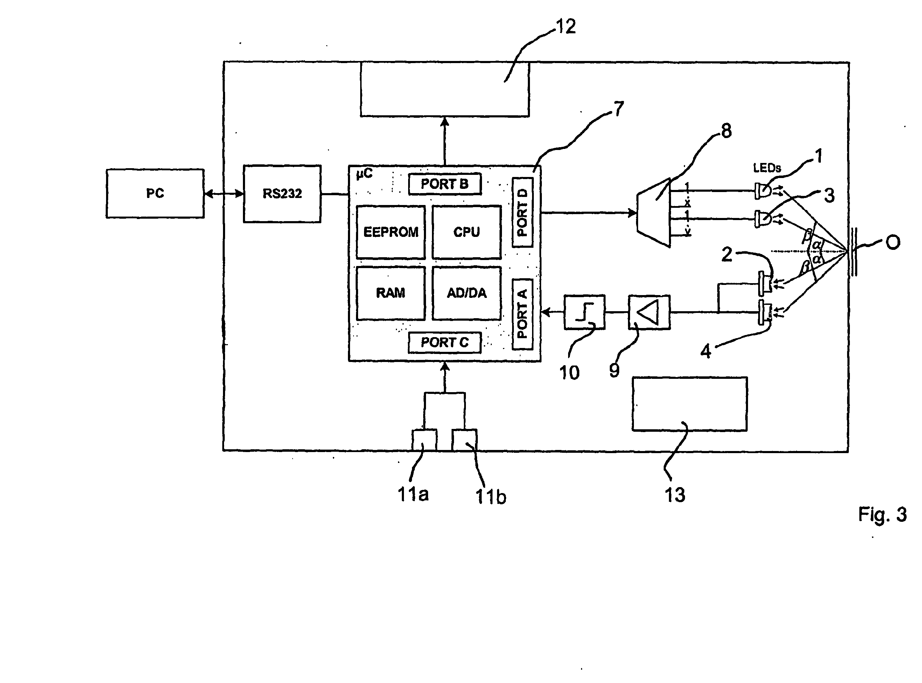

In Fig. 3 ist als Blockschaltbild schematisch der Aufbau einer erfindungsgemäßen Vorrichtung gezeigt. Ein Microcontroller 7 weist mehrere Ein-/Ausgänge Port A, Port B, Port C, Port D, einen Mikroprozessor CPU, einen Analog-Digital-Wandler AD/DA, eine variable Speichereinheit RAM, einen Festspeicher EEPROM sowie eine Schnittstelle RS232 und eine ICP-Schnittstelle zum Anschluss an externe Datenverarbeitungseinrichtungen, wie z. B. PC auf. Der Ein-/Ausgang Port D ist über einen Demultiplexer 8 mit den ersten Lichtquellen 1 und den zweiten Lichtquellen 3 verbunden. Das Gehäuse 5 ist hier der Übersichtlichkeit halber weggelassen worden. Die erste Fotodiode 2 und die zweite Fotodiode 4 sind über einen Verstärker 9 und einen Filter 10 mit dem Ein-/Ausgang Port A des Microcontrollers 7 verbunden. Zur Steuerung der Vorrichtung sind manuelle Taster 11a, 11b mit dem Ein-/Ausgang Port C verbunden. Der weitere Ein-/Ausgang Port B dient dem Anschluss einer Anzeigevorrichtung 12 oder einer Leuchtdiode. Mit 13 ist eine Stromversorgungseinheit bezeichnet, die beispielsweise aus Batterien oder wiederaufladbaren Akkus und Spannungsreglern bestehen kann.

Die Funktion der Vorrichtung ist folgende:

Im Flash Program Memory des Microcontrollers ist ein vorgegebenes Messprogramm gespeichert. Das Messprogramm kann nach Aufsetzen des Gehäuses 5 auf die zu messende Oberfläche O durch Betätigung des ersten Tasters 11a gestartet werden. Zweckmäßigerweise erfolgt zunächst mittels der ersten Fotodiode 2 und der zweiten Fotodiode 4 eine Messung des Untergrundlichts. Der gemessene Wert wird entsprechend dem Messprogramm in der variablen Speichereinheit RAM abgelegt. Anschließend werden nacheinander die Lichtquellen 1 für eine vorgegeben Zeit eingeschaltet. Während der Einschaltphase erfolgt für jede der Lichtquellen 1 eine Messung der reflektierten Intensität mittels der ersten Fotodiode 2 und der zweiten Fotodiode 4. Die gemessenen Werte werden in der variablen Speichereinheit RAM abgelegt. Anschließend werden nacheinander, d.h. sequenziell, die Leuchtkörper der zweiten Lichtquellen 3 ein- und wieder ausgeschaltet. Während der Einschaltphase jeder der Leuchtkörper erfolgt wiederum eine Messung der reflektierten Intensität mittels der ersten Fotodiode 2 und der zweiten Fotodiode 4. Die gemessenen Werte werden unter Verwendung der zuvor gemessenen Werte des Untergrundlichts korrigiert und ebenfalls in der variablen Speichereinheit RAM abgelegt. Nach Beendigung der Messung werden die gemessenen Werte mit im EEPROM gespeicherten Referenz-Intensitäten verglichen. Sofern die Messwerte innerhalb eines vorgegebenen Bereichs der Referenz-Intensitäten liegen, stellt das Messprogramm fest, dass die gemessene Farbe mit der den Referenz-Intensitäten entsprechenden Farbe übereinstimmt. Das Ergebnis wird über die Anzeigevorrichtung 12 ausgegeben. Auf diese Weise können nicht nur Farben, sondern auch in Abhängigkeit des Beobachtungswinkels sich ändernde Farben auf einfache Weise zuverlässig bestimmt werden. Solche Referenz-Intensitäten können beispielsweise durch eine Referenz-Messung einer vorgegebenen Farbe ermittelt und anschließend abgespeichert werden. Es ist selbstverständlich möglich, für eine Vielzahl vorgegebener Farben Referenz-Intensitäten zu bestimmen und dann abzuspeichern. So können beispielsweise Referenz-Intensitäten von Farben mit Kippeffekten für verschiedene Vertriebswege gespeichert werden. Mit der vorgeschlagenen Vorrichtung kann dann nicht nur erkannt werden, ob das betreffende Produkt echt ist, sondern auch, ob es über den vorgesehenen Vertriebsweg ausgeliefert worden ist.

Zur Durchführung einer weiteren Messung wird die zweite Taste 11b betätigt. In diesem Fall kann die Messung sofort beginnen. Zur Korrektur der Messergebnisse kann auf den bereits zuvor ermittelten Messwert des Untergrundlichts zurückgegriffen werden.

Statt eines Vergleichs zwischen den gemessenen Intensitäten und den Referenz-Intensitäten ist es selbstverständlich auch möglich, auf der Grundlage der gemessenen Intensitäten eine Berechnung der Koordinaten im Farbraum durchzuführen. In diesem Fall ist das Programm entsprechend abzuwandeln.

Zur Korrektur der Messwerte bzw. zur Trennung der gemessenen Werte von Störsignalen hat es sich als zweckmäßig erwiesen, eine Einrichtung zur Modulation der Lichtquellen 1, 3 vorzusehen. In diesem Fall werden die Lichtquellen 1, 3 während der Einschaltphase mit einer vorgegebenen Frequenz betrieben. Die von den Fotodioden 2, 4 gemessenen Intensitäten werden nur insoweit berücksichtigt, als sie im beobachteten Frequenzfenster messbar sind. Unter anderem durch künstliches Licht hervorgehobene Störfrequenzen, z. B. 50 Hz oder 100 Hz, können auf diese Weise eliminiert werden. Alle nicht modulierten Signale können beispielsweise über Lock-In-Technik von den modulierten Signalen getrennt werden.

Das Einspielen geeigneter Messprogramme oder die Programmierung des Microcontrollers erfolgt zweckmäßigerweise über die ICP-Schnittstelle.

Zweckmäßigerweise ist die Vorrichtung gemeinsam mit dem Messkopf in einem einzigen Gehäuse als tragbares Handgerät ausgeführt. Es kann aber auch sein, dass der Messkopf mit einem Kabel mit der Vorrichtung verbunden ist. Sofern mit der erfindungsgemäßen Vorrichtung lediglich eine einfache Bestimmung von auf Oberflächen aufgebrachten Farben durchgeführt werden soll, reicht es aus, erste Lichtquellen 1 und die erste Fotodiode 2 und/oder die zweite Fotodiode 4 vorzusehen. Zur Messung von sich in Abhängigkeit des Beobachtungswinkels ändernden Farben ist es erforderlich, erste Lichtquellen 1 und zweite Lichtquellen 3 sowie die erste Fotodiode 2 und/oder die zweite Fotodiode 4 vorzusehen.

Zur Minimierung der Gesamtmessdauer bei sequenziellen Messverfahren hat es sich als vorteilhaft erwiesen, den Messvorgang abzubrechen und wieder von vorne zu beginnen, wenn zwischen 1 und 5 der gemessenen Intensitätswerte nicht mit den gespeicherten Referenz-Intensitäten übereinstimmen. Besonders vorteilhaft ist dieses Abbruchkriterium bei 3 Intensitätswerten. Auf diese Weise arbeitet die Vorrichtung in einem dynamischen Modus, der ein einfaches Handling erlaubt. Sobald ein mit den Referenz-Intensitäten übereinstimmender Datensatz von gemessenen Intensitätswerten ermittelt worden ist, wird der Messvorgang abgebrochen und ein positives Messergebnis ausgegeben. Um die Gesamtmesszeit zu begrenzen, wird die Messdauer beispielsweise auf 5 Sekunden begrenzt. Falls bis dahin keine Übereinstimmung der gemessenen Intensitätswerte mit den Referenz-Intensitäten erzielt worden ist, wird ein negatives Messergebnis signalisiert.

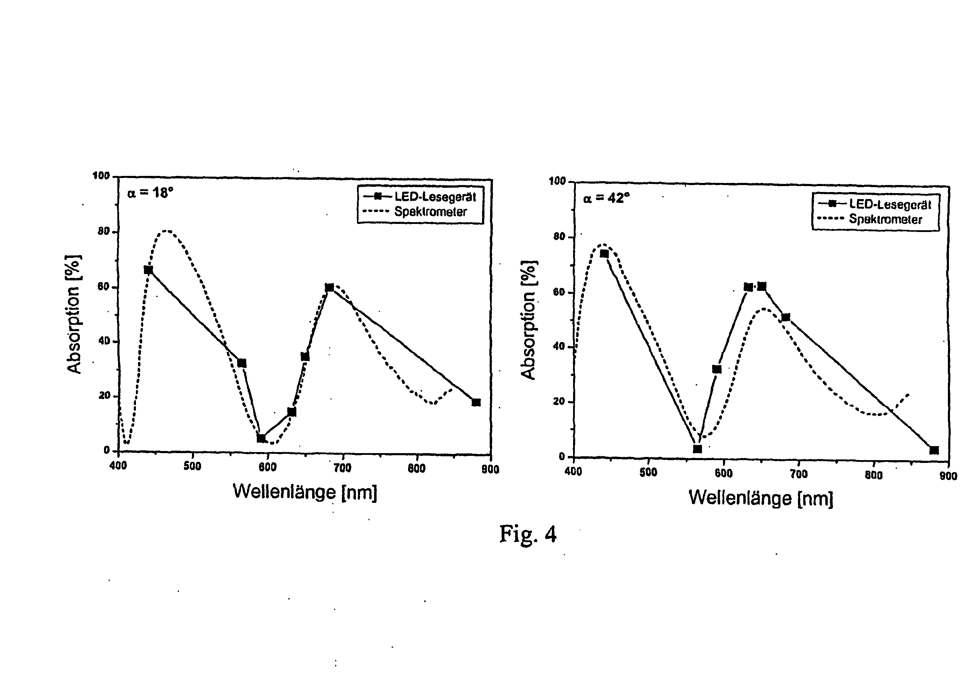

Fig. 4 zeigt einen Vergleich von Messwerten eines erfindungsgemäß arbeitenden Lesegeräts mit Messwerten eines kommerziell erhältlichen Spektrometers (LIGA-Mikrospektrometer STEAG microParts). Das Lesegerät arbeitet mit einem Optikkopf, wie er in Fig. 1 zu sehen ist, und beleuchtet die Oberfläche der gemessenen Kippfarbe sequenziell jeweils mit Leuchtdioden der Wellenlänge 441, 565, 591, 632, 650, 682 und 880 nm. Gemessen wurde eine in Abhängigkeit des Beobachtungswinkel sich ändernde Farbe bei den Winkeln 18° und 42°. Aus den dabei gewonnenen Intensitätsmesswerten I und den, zuvor durch eine analoge Messung an einem polierten Aluminiumspiegel gewonnenen, jeweils maximal reflektierten Intensitäten $I_{max}$ lässt sich die Absorption A in Prozent berechnen.

$$A = I/I_{max}*100$$

Wie in Fig. 4 zu sehen ist, folgen die Absorptionswerte des beschriebenen Lesegeräts bei beiden Messwinkeln sehr genau dem Kurvenverlauf der mittels des Spektrometers gemessenen Absorption.

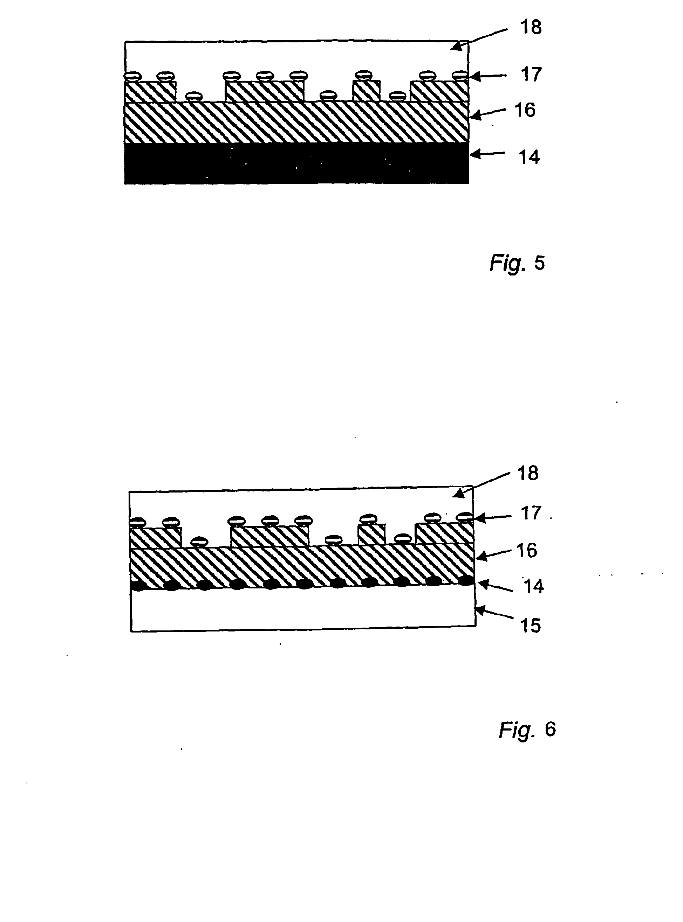

Bei der in den Fig. 5 und 6 gezeigten Markierungen ist eine elektromagnetische Wellen reflektierende erste Schicht mit 14 bezeichnet. Es kann sich dabei um eine Metallfolie, z. B. eine Aluminiumfolie, handeln. Die erste Schicht 14 kann aber auch eine aus Clustern gebildete Schicht sein, welche auf einem Träger 15 aufgebracht ist. Bei dem Träger 15 kann es sich um den zu markierenden Gegenstand handeln. Die Cluster sind zweckmäßigerweise aus Gold hergestellt. Gleichfalls kann es sich auch bei der in Fig. 5 gezeigten ersten Schicht 14 um den Gegenstand handeln, sofern dessen Oberfläche aus einem elektromagnetische Wellen reflektierenden Material gebildet ist.

Auf der ersten Schicht 14 aufgebracht ist eine chemisch inerte zweite Schicht 16. Die zweite Schicht 16 weist eine Struktur auf. Die Struktur ist hier in Form eines Reliefs ausgebildet, welches z. B. nach Art eines Barcodes gestaltet ist. Die Dicke der zweiten Schicht beträgt vorzugsweise zwischen 20 und 1000 nm. Sie wird mittels Dünnschichttechnologie aufgebracht. Dazu eignen sich z. B. Vakuumbeschichtungsverfahren.

Bei der in den Fig. 5 und 6 gezeigten Markierung ist auf der zweiten Schicht 16 eine aus metallischen Clustern hergestellte dritte Schicht 17 aufgebracht. Die dritte Schicht 17 wiederum ist überlagert von einer vierten Schicht 18. Die vierte Schicht 18 schützt die darunterliegenden Schichten vor Beschädigung. Die vierte Schicht 18 kann ebenso wie die zweite Schicht 16 aus einem chemisch inerten und optisch transparenten Material, z. B. einem Metalloxid, -nitrit, -carbid oder Polymer hergestellt sein.

Die Funktion der Markierung ist folgende:

Bei einer Einstrahlung von Licht aus einer Lichtquelle der erfindungsgemäßen Vorrichtung auf eine in Fig. 5 und 6 gezeigte Markierung wird dieses Licht an der ersten Schicht 14 reflektiert. Durch eine Wechselwirkung des reflektierten Lichts mit der aus der metallischen Clustern gebildeten dritten Schicht 17 wird ein Teil des eingestrahlten Lichts absorbiert. Das reflektierte Licht weist ein charakteristisches Spektrum auf. Die Markierung erscheint farbig. Die vom Einstrahlungs- bzw. Beobachtungswinkel abhängige Farbe bzw. das charakteristische Spektrum dient als fälschungssicherer Nachweis für die Echtheit der Markierung.

Hinsichtlich der für die Erzeugung der Wechselwirkungen einzuhaltenden Parameter wird auf die US 5,611,998, die WO 98/48275 sowie die WO 99/47702 verwiesen, deren Offenbarungsgehalt hiermit einbezogen wird.

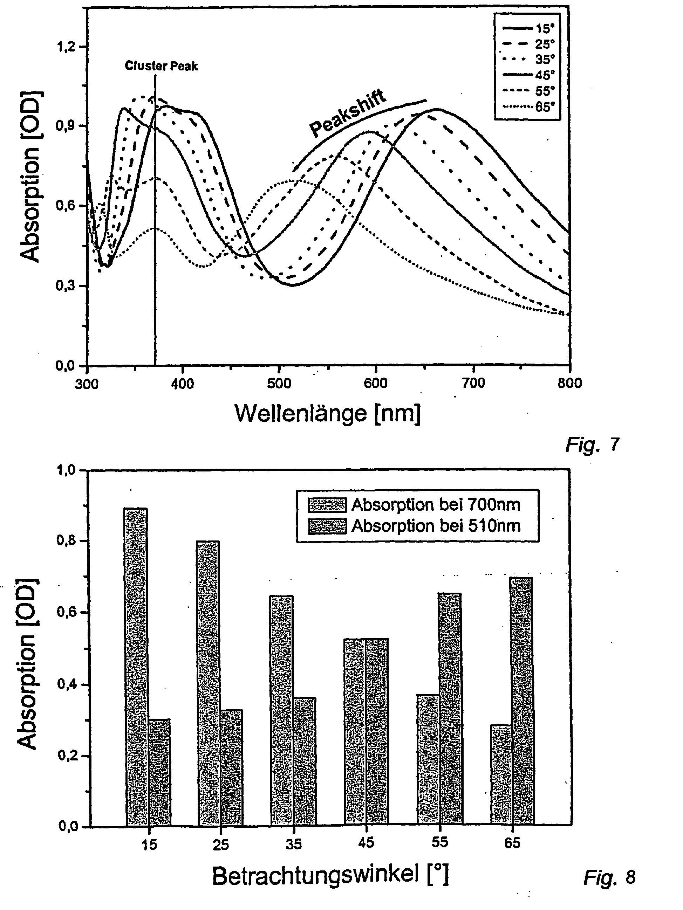

Die in Fig. 7 gezeigten Spektren einer Markierung gemäß Fig. 5 wurden mittels eines UV/VIS-Spektrometers Lambda 25 von Perkin Elmer unter Verwendung eines Reflektionseinsatzes gemessen. Aus Fig. 7 ist ersichtlich, dass der längerwellige Peak mit steigendem Beobachtungswinkel zu kürzeren Wellenlängen hin sich verschiebt. Ferner ist ein feststehender Peak zu beobachten, welcher auf die Silbercluster zurückzuführen ist.

In Fig. 8 ist eine quantitative Auswertung der Spektren gemäß Fig. 7 jeweils bei zwei verschiedenen Wellenlängen gezeigt. Bei den betrachteten Wellenlängen wird in Abhängigkeit des Beobachtungswinkels eine geänderte Absorption beobachtet. Das Absorptionsmuster ist charakteristisch für die Echtheit der Markierung.

Bezugszeichenliste

| | |
|---|---|
| 1 | erste Lichtquellen |
| 2 | erste Fotodiode |
| 3 | zweite Lichtquellen |
| 4 | zweite Fotodiode |
| 5 | Gehäuse |
| 6 | Messöffnung |
| 7 | Microcontroller |
| 8 | Demultiplexer |
| 9 | Verstärker |
| 10 | Filter |
| 11a, b | erster, zweiter Taster |
| 12 | Anzeigevorrichtung |
| 13 | Stromversorgung |
| 14 | erste Schicht |
| 15 | Träger |
| 16 | zweite Schicht |
| 17 | dritte Schicht |
| 18 | vierte Schicht |

| | |
|---|---|
| O | Oberfläche |
| M | Messpunkt |
| $\alpha$1, $\alpha$2 | erster, zweiter Winkel |
| $\beta$1, $\beta$2 | dritter, vierter Winkel |
| N | Normale |
| Port A, B, C, D | Ein-/Ausgang |
| AD/DA | Analog-Digital-Wandler |
| RAM | variable Speichereinheit |
| EEPROM | Festspeicher |
| CPU | Mikroprozessor |
| RS232 | Schnittstelle |
| PC | Datenverarbeitungseinrichtung |

**Patentansprüche**

1. Vorrichtung zur Prüfung der Authentizität einer fälschungssicheren Markierung mit in Abhängigkeit des Beobachtungswinkels sich ändernden Farben, mit

a) mehreren, Licht in einem vorgegebenen Spektralbereich emittierenden, ersten Lichtquellen (1), wobei sich die ersten Lichtquellen (1) in der Wellenlänge ihres Emissionsmaximums voneinander unterscheiden, und wobei die ersten Lichtquellen (1) in einem Gehäuse (5) so aufgenommen sind, dass sie eine Oberfläche (O) der Markierung bei darauf aufgesetztem Gehäuse (5) unter einem vorgegebenen ersten Winkel ($\alpha$1) bestrahlen,

b) mehreren, in einem vorgegebenen Spektralbereich emittierenden, zweiten Lichtquellen (3), wobei sich die zweiten Lichtquellen (3) in der Wellenlänge ihres Emissionsmaximums voneinander unterscheiden, und wobei die zweiten Lichtquellen (3) im Gehäuse (5) so aufgenommen sind, dass sie die Oberfläche (O) der Markierung bei darauf aufgesetztem Gehäuse (5) unter einem vorgegebenen vom ersten Winkel ($\alpha$1) verschiedenen dritten Winkel ($\beta$1) bestrahlen,

c) einem im Gehäuse (5) in einem zweiten Winkel ($\alpha$2) angeordneten ersten Mittel (2) zur Messung der Intensitäten des von der Oberfläche (O) der Markierung spekulär reflektierten Lichts,

d) einem im Gehäuse (5) in einem vierten Winkel ($\beta$2) angeordneten zweiten Mittel (4) zur Messung der Intensitäten des von der Oberfläche (O) der Markierung spekulär reflektierten Lichts, und

e) einem Mittel (7) zum automatischen Vergleich der gemessenen Intensitäten mit für die jeweiligen Lichtquellen (1) für mindestens eine vorgegebene Farbe gespeicherten Referenz-Intensitäten.

2. Vorrichtung nach einem der vorhergehenden Ansprüche, wobei der vorgegebene Spektralbereich bei halber Maximalintensität eine Breite von weniger als 100 nm, vorzugsweise von weniger als 50 nm, aufweist.

3. Vorrichtung nach einem der vorhergehenden Ansprüche, wobei die Lichtquellen (1, 3) Leuchtdioden, Laser oder die freien Enden von damit verbundenen Lichtleitfasern sind.

4. Vorrichtung nach einem der vorhergehenden Ansprüche, wobei das Mittel zur Messung der Intensitäten mindestens eine Fotodiode (2, 4) aufweist.

5. Vorrichtung nach einem der vorhergehenden Ansprüche, wobei der erste (α1) und der dritte (β1) Winkel in einem Bereich von 5° bis 60°, vorzugsweise von 15° bis 45°, liegen.

6. Vorrichtung nach einem der vorhergehenden Ansprüche, wobei eine Einrichtung zum sequenziellen Beleuchten der Oberfläche (O) mit den Lichtquellen (1, 3) und zum Messen (2, 4) der jeweiligen Intensitäten des reflektierten Lichts in definierter Reihenfolge vorgesehen ist.

7. Vorrichtung nach einem der vorhergehenden Ansprüche, wobei das Emissionsmaximum der Lichtquellen (1, 3) im nahen UV-, im sichtbaren- oder im IR-Spektralbereich liegt.

8. Vorrichtung nach einem der vorhergehenden Ansprüche, wobei die Beleuchtungs- und die Messdauer in Abhängigkeit der Leuchtcharakteristik jeder der Lichtquellen (1, 3) und/oder der Messcharakteristik des Mittels (2, 4) zur Messung der Intensitäten festgelegt wird.

9. Vorrichtung nach einem der vorhergehenden Ansprüche, wobei eine mechanische, elektronische oder Software-technische Einrichtung zur Kompensation von Untergrundlicht vorgesehen ist.

10. Vorrichtung nach einem der vorhergehenden Ansprüche, wobei zur Trennung der Störsignale von den Messsignalen eine Einrichtung zur Modulation der Lichtquellen (1, 3) vorgesehen ist.

11. Vorrichtung nach einem der vorhergehenden Ansprüche wobei mindestens 3 und höchstens 12 erste (1) und/oder zweite (3) Lichtquellen vorgesehen sind.

12. Vorrichtung nach einem der vorhergehenden Ansprüche, wobei das Mittel zum automatischen Vergleich oder zur Berechnung der Koordinaten im Farbraum einen Microcontroller (7) aufweist.

13. Vorrichtung nach einem der vorhergehenden Ansprüche, wobei eine Anzeigevorrichtung (12), vorzugsweise ein Display oder eine oder mehrere weitere Leuchtdioden, zur Anzeige des beim Vergleich ermittelten Ergebnisses vorgesehen ist.

14. Verfahren zur Prüfung der Authentizität einer fälschungssicheren Markierung mit in Abhängigkeit des Beobachtungswinkels sich ändernden Farben, mit folgenden Schritten:

aa) Bestrahlen einer Oberfläche (O) der Markierung mit mehreren, Licht in einem vorgegebenen Spektralbereich emittierenden, in einem Gehäuse (5) aufgenommenen ersten Lichtquellen (1) unter einem ersten Winkel (α1), wobei sich die ersten Lichtquellen (1, 3) in der Wellenlänge ihres Emissionsmaximums voneinander unterscheiden,

bb) Bestrahlen der Oberfläche (O) der Markierung mit mehreren, Licht in einem vorgegebenen Spektralbereich emittierenden, im Gehäuse (5) aufgenommenen zweiten Lichtquellen (3) unter einem vom ersten Winkel (α1) verschiedenen dritten Winkel (β1), wobei sich die zweiten Lichtquellen (3) in der Wellenlänge ihres Emissionsmaximums voneinander unterscheiden,

cc) Messen der Intensitäten des von der Oberfläche (O) der Markierung in einem zweiten Winkel (α2) spekulär reflektierten Lichts mittels eines im Gehäuse (5) unter dem zweiten Winkel (α2) angeordneten ersten Mittels (2) zur Messung der Intensitäten,

dd) Messen der intensitäten des von der Oberfläche (O) der Markierung spekulär reflektierten Lichts in einem vierten Winkel (β2) mittels eines im Gehäuse (5) unter dem vierten Winkel (β2) angeordneten zweiten Mittels (4) zur Messung der Intensitäten, und

ee) Vergleichen der gemessenen Intensitäten mit für die jeweiligen Lichtquellen (1, 3) für mindestens eine vorgegebene Farbe gespeicherten Referenz-Intensitäten.

15. Verfahren nach Anspruch 14, wobei der vorgegebene Spektralbereich bei halber Maximalintensität eine Breite von weniger als 100 nm, vorzugsweise von weniger als 50 nm, aufweist.

16. Verfahren nach einem der Ansprüche 14 oder 15, wobei die Beleuchtungs- (α1, β2) und Messwinkel (α2, β2) durch Anbringen der Lichtquellen (1, 3) und der Mittel (2, 4) zur Messung der Intensitäten in einem gemeinsamen Gehäuse (5) festgelegt werden.

17. Verfahren nach einem der Ansprüche 14 bis 16, wobei als Lichtquellen (1, 3) Leuchtdioden, Laser oder die freien Enden von damit verbundenen Lichtleitfasern verwendet werden.

18. Verfahren nach einem der Ansprüche 14 bis 17, wobei als Mittel zur Messung der Intensitäten mindestens eine Fotodiode (2, 4) verwendet wird.

19. Verfahren nach einem der Ansprüche 14 bis 18, wobei der erste (α1) und der dritte (β1) Winkel in einem Bereich von 5° bis 60°, vorzugsweise 15° bis 45°, liegen.

**20.** Verfahren nach einem der Ansprüche 14 bis 19, wobei die Lichtquellen (1, 3) sequenziell in definierter Reihenfolge betrieben werden.

**21.** Verfahren nach einem der Ansprüche 14 bis 20, wobei das Emissionsmaximum der Lichtquellen (1, 3) im nahen UV-, im sichtbaren- oder im IR-Spektralbereich liegt.

**22.** Verfahren nach einem der Ansprüche 14 bis 21, wobei die Beleuchtungs- und die Messdauer in Abhängigkeit der Leuchtcharakteristik jeder der Lichtquellen (1, 3) und/oder der Messcharakteristik des Mittels (2, 4) zum Messung der Intensitäten festgelegt wird.

**23.** Verfahren nach einem der Ansprüche 14 bis 22, wobei durch mechanische, elektronische oder Software-technische Maßnahmen Untergrundlicht kompensiert wird.

**24.** Verfahren nach einem der Ansprüche 14 bis 23, wobei zur Trennung der Störsignale von den Messsignalen die Lichtquellen (1, 3) moduliert betrieben werden.

**25.** Verfahren nach einem der Ansprüche 14 bis 24, wobei mindestens 3 und höchstens 12 erste (1) und/oder zweite Lichtquellen (3) vorgesehen sind.

**26.** Verfahren nach einem der Ansprüche 14 bis 25, wobei der automatische Vergleich oder die Berechnung der Koordinaten im Farbraum unter Verwendung eines Microcontrollers (7) durchgeführt wird.

**27.** Verfahren nach einem der Ansprüche 14 bis 26, wobei das beim Vergleich ermittelte Ergebnis mittels einer Anzeigevorrichtung (12), vorzugsweise eines Displays oder einer oder mehrerer weitere-Leuchtdioden, angezeigt wird.

**28.** Verfahren nach einem der Ansprüche 14 bis 27, wobei als fälschungssichere Markierung eine Markierung verwendet wird, welche eine mit einem Gegenstand verbundene, elektromagnetische wellen reflektierende erste Schicht (1) aufweist, auf welcher eine für elektromagnetische Wellen durchlässige, inerte zweite Schicht (3) mit einer vorgegebenen Dicke aufgebracht ist, wobei eine aus metallischen Clustern gebildete dritte Schicht (4) auf der zweiten Schicht (3) aufgebracht ist.

**29.** Verfahren nach Anspruch 28, wobei die zumindest eine der Schichten (1, 3, 4,5) eine Struktur aufweist.

**30.** Verfahren nach Anspruch 28 oder 29, wobei eine die dritte Schicht (4) überdeckende, für elektromagnetische Wellen durchlässige inerte vierte Schicht (5) vorgesehen ist.

**31.** Verfahren nach einem der Ansprüche 28 bis 30, wobei die metallischen Cluster aus Silber, Gold, Platin, Aluminium, Kupfer, Zinn, Eisen, Kobalt, Chrom, Nikkel, Palladium, Titan oder Indium gebildet sind.

**32.** Verfahren nach einem der Ansprüche 28 bis 31, wobei die zweite (3) und/oder vierte Schicht (5) aus einem der folgenden Materialien hergestellt ist/sind: Metalloxid, Metallnitrit, Metallcarbid, insbesondere aus Siliziumoxid, -nitrit, Zinnoxid, -nitrit, Aluminiumoxid, -nitrit oder Polymer, insbesondere Polycarbonat (PC), Polyethylen (PE), Polypropylen (PP), Polyurethan (PU), Polyimid (PI), Polystyrol (PS), Polyehtylenterephthalat (PET) oder Polymethacrylat (PMA).

**33.** Verfahren nach einem der Ansprüche 28 bis 32, wobei bei einem Abstand zwischen der ersten (l) und der dritten Schicht (4) von weniger als 2 $\mu$m ein eindeutig identifizierbare Färbung erkennbar ist.

**34.** Verfahren nach einem der Ansprüche 28 bis 33, wobei die Schichten (14, 16, 17, 18) mittels Dünnschichttechnologie, wie PVD oder CVD, sowie Drucktechniken, wie Tiefdruck, hergestellt ist/sind.

**Claims**

**1.** Device for checking the authenticity of a forgeryproof marking with colors which change depending on the angle of observation, with

a) several first light sources (1) which are emitting light in a specified spectral range, wherein the first light sources (1) differ from one another in the wavelength of their emission maximum, and wherein the first light sources (1) are installed in a housing (5) so that they irradiate a surface (O) of the marking under a specified first angle ($\alpha$1) when the housing (5) is placed on this surface,

b) several second light sources (3) which are emitting light in a specified spectral range, wherein the second light sources (3) differ from one another in the wavelength of their emission maximum, and wherein the second light sources (3) are installed in the housing (5) so that they irradiate a surface (O) of the marking under a specified third angle ($\beta$1) which differs from the first angle ($\alpha$1) when the housing (5) is placed on this surface,

c) a first means (2) located at a second angle ($\alpha$2) in the housing (5) for the measurement of the intensities of the light specualarly reflected by the surface (O) of the marking,

d) a second means (4) located at a fourth angle ($\beta$2) in the housing (5) for the measurement of the intensities of the light specualarly reflected by the surface (O) of the marking,

e) a means (7) of automatic comparison of the measured intensities with the stored reference intensities for the respective light sources (1) for at least one specified color.

2. Device as defined in one of the preceding claims, wherein the specified spectral range has a width of less than 100 nm, preferably of less than 50 nm at half maximum intensity.

3. Device as defined in one of the preceding claims, wherein the light sources (1, 3) are light-emitting diodes, lasers or the free ends of thereby connected light-conducting fibers.

4. Device as defined in one of the preceding claims, wherein the means of measuring the intensities has at least one photo diode (2, 4).

5. Device as defined in one of the preceding claims, wherein the first ($\alpha$1) and the third ($\beta$1) angle are located in an area from 5° to 60°, preferably from 15° to 45°.

6. Device as defined in one of the preceding claims, wherein a unit for the sequential illumination of the surface (O) with the light sources (1, 3) and for the measurement (2, 4) of the particular intensities of the reflected light in a defined sequence is provided.

7. Device as defined in one of the preceding claims, wherein the emission maximum of the light sources (1, 3) is in the near UV, in the visible or in the IR spectral range.

8. Device as defined in one of the preceding claims, wherein the illumination and measuring duration is specified in dependence on the luminance characteristic of each of the light sources (1, 3) and/or the measuring characteristic of the means (2, 4) of measuring the intensities.

9. Device as defined in one of the preceding claims, wherein a mechanical, electronic or technical software unit is provided to offset the background light.

10. Device as defined in one of the preceding claims, wherein a unit is provided to modulate the light sources (1, 3) for the separation of the interference signals from the measuring signals.

11. Device as defined in one of the preceding claims, wherein at least 3 and not more than 12 first (1) and/or second (3) light sources are provided.

12. Device as defined in one of the preceding claims, wherein the means of automatic comparison or of calculating the coordinates in the color range has a micro-controller (7).

13. Device as defined in one of the preceding claims, wherein an indication device (12), preferably a display, or one or more additional light-emitting diodes is provided to indicate the results determined from the comparison.

14. Method for checking the authenticity of a forgery-proof marking with colors which change depending on the angle of observation, consisting of the following steps:

aa) Irradiation of a surface (O) of the marking with several first light sources (1) emitting light in a specified spectral range under a first angle ($\alpha$1) and located in a housing (5), wherein the first light sources (1, 3) differ from each other in the wavelength of their emission maximum,

bb) Irradiation of a surface (O) of the marking with several second light sources (3) emitting light in a specified spectral range under a third angle ($\beta$1) which differs from the first angle (($\alpha$1) and located in a housing (5), wherein the second light sources (3) differ from each other in the wavelength of their emission maximum,

cc) Measurement of the intensities of the light specualarly reflected by the surface (0) of the marking at a second angle ($\alpha$2), via a first means (2) for the measurement of the intensities located in the housing (5) under the second angle ($\alpha$2),

dd) Measurement of the intensities of the specularly light reflected by the surface (O) of the marking at a fourth angle ($\beta$2), via a second means (4) for the measurement of the intensities located in the housing (5) under the fourth angle ($\beta$2), and

ee) Comparison of the measured intensities with reference intensities stored for the particular light sources (1, 3) for at least one specified color.

15. Method as defined in claim 14, wherein the specified spectral range has a width of less than 100 nm, preferably less than 50 nm, at half maximum intensity.

16. Method as defined in one of the claims 14 or 15, wherein the illumination ($\alpha$1, $\beta$2) and measuring angle ($\alpha$2, $\beta$2) are specified by installing the light sources (1, 3) and the means (2, 4) of measuring the intensities in a common housing (5).

17. Method as defined in one of the claims 14 to 16, wherein light-emitting diodes, lasers or the free ends of thereby connected light-conducting fibers are used as light sources (1, 3).

**18.** Method as defined in one of the claims 14 to 17, wherein at least one photo diode (2, 4) is used as the means of measuring the intensities.

**19.** Method as defined in one of the claims 14 to 18, wherein the first ($\alpha$1) and the third ($\beta$1) angle are located in a range from 5° to 60°, preferably 15° to 45°.

**20.** Method as defined in one of the claims 14 to 19, wherein the light sources (1, 3) are run sequentially in a defined order.

**21.** Method as defined in one of the claims 14 to 20, wherein the emission maximum of the light sources (1, 3) is located in the near UV, in the visible or in the IR spectral range.

**22.** Method as defined in one of the claims 14 to 21, wherein the duration of illumination and measurement is specified in dependence on the luminance characteristic of each of the light sources (1, 3) and/or the measurement characteristic of the means (2, 4) of measuring the intensities.

**23.** Method as defined in one of the claims 14 to 22, wherein background light is compensated via mechanical, electronic or technical software measures.

**24.** Method as defined in one of the claims 14 to 23, wherein the light sources (1, 3) are modulated to separate the interference signals from the measuring signals.

**25.** Method as defined in one of the claims 14 to 24, wherein at least 3 and not more than 12 first (1) and/or second light sources (3) are provided.

**26.** Method as defined in one of the claims 14 to 25, wherein the automatic comparison or the calculation of the coordinates in the color range is performed using a micro-controller (7).

**27.** Method as defined in one of the claims 14 to 26, wherein the result determined during the comparison is indicated by an indication device (12), preferably a display or one or more additional light-emitting diodes.

**28.** Method as defined in one of the claims 14 to 27, wherein a marking is used as forgery-proof marking which has a first layer (1) which reflects electro-magnetic waves and is connected with an object, on which first layer an inert, electro-magnetic-wave-permeable second layer (3) with a specified thickness is applied, wherein a third layer (4) made of metallic clusters is applied to the second layer (3).

**29.** Method as defined in claim 28, wherein at least one of the layers (1, 3, 4, 5) has a structure.

**30.** Method as defined in claim 28 or 29, wherein an inert fourth layer (5) is provided which covers the third layer (4) and which can be permeated by electromagnetic waves.

**31.** Method as defined in one of the claims 28 to 30, wherein the metallic clusters are made of silver, gold, platinum, aluminum, copper, tin, iron, cobalt, chromium, nickel, palladium, titanium or indium.

**32.** Method as defined in one of the claims 28 to 31, wherein the second (3) and/or fourth layer (5) is/are made of one of the following materials: metal oxide, metal nitrite, metal carbide, particularly of silicon oxide, silicon nitrite, tin oxide, tin nitrite, aluminum oxide, aluminum nitrite or polymers, in particular polycarbonate (PC), polyethylene (PE), polypropylene (PP), polyurethane (PUR), polyimide (PI), polystyrene (PS), polyethylene terephthalate (PET) or polymethacrylate (PMA).

**33.** Method as defined in one of the claims 28 to 32, wherein a uniquely identifiable coloring can be recognized at an interval between the first (1) and the third layer (4) of less than 2 $\mu$m.

**34.** Method as defined in one of the claims 28 to 33, wherein the layers (14, 16, 17, 18) is/are made via thin-film technology such as PVD or CVD as well as printing technologies such as gravure printing.

**Revendications**

**1.** Dispositif de vérification de l'authenticité d'un marquage infalsifiable comportant des couleurs qui se modifient en fonction de l'angle d'observation, comprenant

    a) plusieurs premières sources lumineuses (1) émettant de la lumière dans une bande spectrale prédéfinie, les premières sources lumineuses (1) se distinguant les unes des autres par la longueur d'onde de leur maximum d'émission, et les premières sources lumineuses (1) étant logées dans un boîtier (5) de façon telle qu'elles irradient une surface (O) du marquage lorsque le boîtier (5) est placé dessus selon un premier angle ($\alpha$1) prédéfini,
    b) plusieurs secondes sources lumineuses (3) émettant dans une bande spectrale prédéfinie, les secondes sources lumineuses (3) se distinguant les unes des autres par la longueur d'onde de leur maximum d'émission, et les secondes sources lumineuses (3) étant logées dans un boîtier (5) de façon telle qu'elles irradient la surface (O) du marquage lorsque le boîtier (5) est placé dessus selon un troisième angle (β1) différent du premier angle (α1) prédéfini,

c) un premier moyen (2) disposé dans un boîtier (5) selon un second angle (α2), destiné à la mesure des intensités de la lumière réfléchie spéculairement par la surface (O) du marquage,

d) un second moyen (4) disposé dans un boîtier (5) selon un quatrième angle (β2), destiné à la mesure des intensités de la lumière réfléchie spéculairement par la surface (O) du marquage, et

e) un moyen (7) permettant de comparer automatiquement les intensités mesurées avec les intensités de référence mémorisées pour les sources lumineuses (1) respectives pour au moins une couleur prédéfinie.

2. Dispositif selon l'une des revendications précédentes, la bande spectrale définie présentant une largeur inférieure à 100 nm, de préférence inférieure à 50 nm, pour la moitié de l'intensité maximale.

3. Dispositif selon l'une des revendications précédentes, les sources lumineuses (1, 3) étant des diodes luminescentes, des lasers ou les extrémités libres de fibres optiques qui y sont reliées.

4. Dispositif selon l'une des revendications précédentes, le moyen de mesure des intensités présentant au moins une photodiode (2, 4).

5. Dispositif selon l'une des revendications précédentes, le premier (α1) et le troisième angle (β1) étant compris dans une plage de 5° à 60°, de préférence de 15° à 45°.

6. Dispositif selon l'une des revendications précédentes, un dispositif d'éclairage séquentiel de la surface (O) avec les sources lumineuses (1, 3) et de mesure (2, 4) des intensités respectives de la lumière réfléchie selon un ordre défini étant prévu.

7. Dispositif selon l'une des revendications précédentes, le maximum d'émission des sources lumineuses (1, 3) étant compris dans la gamme spectrale des UV proches, de la lumière visible ou de l'infrarouge.

8. Dispositif selon l'une des revendications précédentes, la durée d'éclairage et de mesure étant déterminée en fonction de la caractéristique lumineuse de chacune des sources lumineuses (1, 3) et/ou de la caractéristique de mesure du moyen (2, 4) de mesure des intensités.

9. Dispositif selon l'une des revendications précédentes, un dispositif mécanique, électronique ou de technique logicielle étant prévu pour la compensation de la lumière de fond.

10. Dispositif selon l'une des revendications précédentes, un dispositif de modulation des sources lumineuses (1, 3) étant prévu pour séparer les signaux parasites des signaux de mesure.

11. Dispositif selon l'une des revendications précédentes, au moins 3 et au plus 12 premières (1) et/ou secondes (3) sources lumineuses étant prévues.

12. Dispositif selon l'une des revendications précédentes, le moyen de comparaison automatique ou de calcul des coordonnées dans l'espace des couleurs présentant un microcontrôleur (7).

13. Dispositif selon l'une des revendications précédentes, un dispositif d'affichage (12), de préférence un écran ou une ou plusieurs autres diodes luminescentes, étant prévu pour afficher le résultat déterminé lors de la comparaison.

14. Procédé de vérification de l'authenticité d'un marquage infalsifiable ayant des couleurs qui se modifient en fonction de l'angle d'observation, comportant les étapes suivantes :

aa) irradiation d'une surface (O) du marquage avec plusieurs premières sources lumineuses (1) logées dans un boîtier (5), émettant de la lumière selon une bande spectrale prédéfinie suivant un premier angle (α1), les premières sources lumineuses (1, 3) se distinguant les unes des autres par la longueur d'onde de leur maximum d'émission,

bb) irradiation de la surface (O) du marquage avec plusieurs secondes sources lumineuses (3) logées dans un boîtier (5), émettant de la lumière selon une bande spectrale prédéfinie suivant un troisième angle (β1) différent du premier angle (α1), les secondes sources lumineuses (3) se distinguant les unes des autres par la longueur d'onde de leur maximum d'émission,

cc) mesure des intensités de la lumière réfléchie spéculairement par la surface (O) du marquage suivant un second angle (α2) par l'intermédiaire d'un premier moyen (2) logé dans le boîtier (5) selon le second angle (α2) pour la mesure des intensités,

dd) mesure des intensités de la lumière réfléchie spéculairement par la surface (O) du marquage suivant un quatrième angle (β2) par l'intermédiaire d'un deuxième moyen (4) logé dans le boîtier (5) selon le quatrième angle (β2) pour la mesure des intensités, et

ee) comparaison des intensités mesurées avec les intensités de référence mémorisées pour les sources lumineuses respectives (1, 3) pour au moins une couleur prédéfinie.

15. Procédé selon la revendication 14, la bande spectrale prédéfinie présentant une largeur inférieure à 100 nm, de préférence inférieure à 50 nm, pour la moitié de l'intensité maximale.

16. Procédé selon l'une de revendications 14 ou 15, l'angle d'éclairage ($\alpha$1, $\beta$2) et l'angle de mesure ($\alpha$2, $\beta$2) étant déterminés par l'application des sources lumineuses (1, 3) et des moyens (2, 4) pour la mesure des intensités dans un boîtier commun (5).

17. Procédé selon l'une des revendications 14 à 16, des diodes luminescentes, des lasers ou les extrémités libres de fibres optiques qui y sont reliées étant utilisés comme sources lumineuses (1, 3).

18. Procédé selon l'une des revendications 14 à 17, au moins une photodiode étant utilisée comme moyen de mesure des intensités.

19. Procédé selon l'une des revendications 14 à 18, le premier ($\alpha$1) et le troisième ($\beta$1) angle étant compris dans une plage de 5° à 60°, de préférence de 15° à 45°.

20. Procédé selon l'une des revendications 14 à 19, les sources lumineuses (1, 3) étant exploitées séquentiellement selon un ordre défini.

21. Procédé selon l'une des revendications 14 à 20, le maximum d'émission des sources lumineuses (1, 3) étant compris dans la gamme spectrale des UV proches, de la lumière visible ou de l'infrarouge.

22. Procédé selon l'une des revendications 14 à 21, la durée d'éclairage et de mesure étant définie en fonction de la caractéristique d'éclairage de chacune des sources lumineuses (1, 3) et/ou de la caractéristique de mesure du moyen (2, 4) de mesure des intensités.

23. Procédé selon l'une des revendications 14 à 22, la lumière de fond étant compensée par des mesures mécaniques, électroniques ou de technique logicielle.

24. Procédé selon l'une des revendications 14 à 23, les sources lumineuses (1, 3) étant exploitées de manière modulée pour séparer les signaux parasites des signaux de mesure.

25. Procédé selon l'une des revendications 14 à 24, au moins 3 et au plus 12 premières (1) et/ou secondes sources lumineuses (3) étant prévues.

26. Procédé selon l'une des revendications 14 à 25, la comparaison automatique ou le calcul des coordonnées dans l'espace des couleurs étant effectué en utilisant un microcontrôleur (7).

27. Procédé selon l'une des revendications 14 à 26, le résultat déterminé lors de la comparaison étant affiché au moyen d'un dispositif d'affichage (12), de préférence un écran ou une ou plusieurs autres diodes luminescentes.

28. Procédé selon l'une des revendications 14 à 27, un marquage, utilisé comme marquage infalsifiable, présentant une première couche (1) réfléchissant des ondes électromagnétiques et reliée à un objet, sur laquelle est appliquée une seconde couche inerte (3) perméable aux ondes électromagnétiques et présentant une épaisseur définie, une troisième couche (4) formée d'amas métalliques étant appliquée sur la seconde couche (3).

29. Procédé selon la revendication 28, au moins une des couches (1, 3, 4, 5) présentant une structure.

30. Procédé selon la revendication 28 ou 29, une quatrième couche (5) inerte perméable aux ondes électromagnétiques et recouvrant la troisième couche (4) étant prévue.

31. Procédé selon l'une des revendications 28 à 30, les amas métalliques étant formés d'argent, d'or, de platine, d'aluminium, de cuivre, d'étain, de fer, de cobalt, de chrome, de nickel, de palladium, de titane ou d'indium.

32. Procédé selon l'une des revendications 28 à 31, la seconde (3) et/ou la quatrième couche (5) étant fabriquée(s) à partir d'un des matériaux suivants : oxyde métallique, nitrure métallique, carbure métallique, en particulier oxyde de silicium, nitrure de silicium, oxyde d'étain, nitrure d'étain, oxyde d'aluminium, nitrure d'aluminium ou polymère, en particulier polycarbonate (PC), polyéthylène (PE), polypropylène (PP), polyuréthane (PU), polyimide (PI), polystyrène (PS), polyéthylène théréphtalate (PET) ou polyméthacrylate (PMA).

33. Procédé selon l'une des revendications 28 à 32, une coloration non équivoque étant identifiable pour un écart entre la première (1) et la troisième couche (4) de moins de 2 $\mu$m.

34. Procédé selon l'une des revendications 28 à 33, les couches (14, 16, 17, 18) étant fabriquées au moyen de la technologie des couches minces telle que PVD ou CVD ainsi que des techniques d'impression, par exemple l'héliogravure.

Fig. 1

Fig. 2

Fig. 3

Fig. 4

Fig. 5

Fig. 6

*Fig. 7*

*Fig. 8*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5369481 A
- US 4968143 A
- US 5042893 A
- US 6285452 B
- WO 0218155 A2
- DE 4434168 A1
- DE 19962779 A1
- WO 0231780 A
- US 5611998 A
- WO 9848275 A
- WO 9947702 A